**Europäisches Patentamt**

**European Patent Office**

**Office européen des brevets**

(19)

(11) Publication number: **0 109 133**
**A1**

(12) # EUROPEAN PATENT APPLICATION

(21) Application number: **83201613.3**

(22) Date of filing: **11.11.83**

(51) Int. Cl.³: **B 60 F 3/00**

(30) Priority: **12.11.82 NL 8204392**

(43) Date of publication of application: **23.05.84**
**Bulletin 84/21**

(84) Designated Contracting States: **AT BE CH DE FR GB IT LI LU NL SE**

(71) Applicant: **Provinciale Stichting Werkgelegenheidsprojekten Groningen, Martinikerkhof 32, NL-9712 JH Groningen (NL)**

(72) Inventor: **Van Rossem, Jan, Boven Oosterdiep 124, NL-9641 JV Veendam (NL)**

(74) Representative: **Urbanus, Henricus Maria, Ir. et al, c/o Vereenigde Octrooibureaux Nieuwe Parklaan 107, NL-2587 BP 's-Gravenhage (NL)**

(54) **Amphibian camper.**

(57) An amphibian camper comprising a wheeled under-carriage (2), a superstructure (3) mounted on the under-carriage (2), serving as living quarters, and pontoons (6) secured on opposite sides.

Each pontoon (6) is a dimensionally stable body which, in an inoperative condition, is situated substantially underneath the superstructure (3). Extension means are provided for moving the pontoons (6) from the inoperative condition into a catamaran position in which there are located more outwardly from the superstructure (3).

0109133

Title: Amphibian camper.

This invention relates to an amphibian camper comprising a wheeled under-carriage, a superstructure mounted on said under-carriage and serving as living quarters, - and pontoons secured on opposite sides. Such an amphibian camper is disclosed in Netherlands patent application 72,07677.

An amphibian camper offers the advantage that it can be used both as a camper and as a boat at relatively small expense, while, generally speaking, it does not need a berth, which is the case with a boat.

The above prior amphibian camper has the disadvantage, however, that the conversion of the camper to the boat is rather cumbersome and, in any case, time-consuming. In fact, the prior camper is provided with inflatable pontoons with a relatively large volume. Their inflation requires much time, or compressed air should be available. A compressed-air installation, however, is not generally available.

Furthermore, the use of inflatable pontoons makes these vulnerable, in that the occurrence of leaks is not imaginary, while the quality of the material of which the pontoons are made deteriorates in time. This latter is promoted owing to the pontoons being in a folded condition for most of the time.

Another disadvantage of the prior amphibian camper is that, in the operative condition, the pontoons are positioned immediately next to the under-carriage. The result is that, in the water, the amphibian forms a relatively tall and narrow whole, which is not very stable. In fact, for comfort of the occupants, the superstructure should give a free height of at least about 1.90 m.

It is an object of the present invention to overcome the disadvantages outlined, and generally to provide an effective amphibian camper which ensures comfortable use on both land and water, and can be converted from the condition for travel on land into the condition for travel in water, and the other way round, in a simple and rapid manner. For this purpose, according to the invention, an amphibian camper of the kind described is characterized in that each pontoon is a dimensionally stable body which, in an inoperative position, is situated substantially underneath said superstructure, and that extension means are provided for moving the pontoons from the inoperative position into a catamaran position in which they are located more outwardly from said superstructure.

The construction will be described in more detail hereinafter with reference to the accompanying drawings. In said drawings

Fig. 1 shows a side-elevational view of one embodiment of an amphibian camper according to the present invention;

Fig. 2 shows a front-elevational view of the amphibian camper illustrated in Fig. 1;

Fig. 3 shows a detail of the amphibian camper of Figs. 1 and 2; and

Fig. 4 shows a front-elevational view of a different embodiment of an amphibian camper according to the present invention.

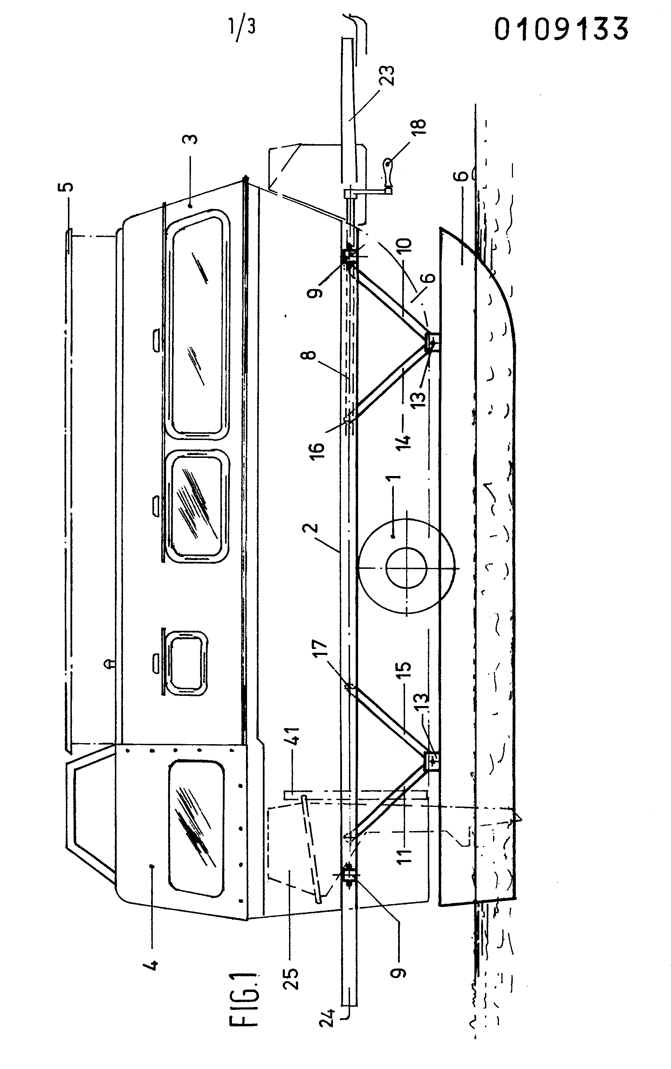

Fig. 1 shows a side-elevational view of one embodiment of an amphibian camper according to the present invention. An under-carriage 2, provided with wheels 1, carries a superstructure or cabin 3, arranged as living quarters.

The rear part 4 of the superstructure is preferably open, as usual with pleasure craft, while the cabin may further be provided with a lifting roof, as sometimes used in truck campers and shown diagrammetically at 5.

Secured on opposite sides of the under-carriage are elongate pontoons 6. In the inoperative condition, the pontoons are located directly underneath the superstructure and next to the wheels as indicated at 6. For this purpose, a recess, not shown, may be provided in the pontoons on the inside at the level of the wheels.

The pontoons are dimensionally stable bodies which may consist, for example, of a polyester envelope filled with synthetic plastics foam, such as polyurethane foam. Pontoons built up in this way have a service life comparable to that of the rest of the amphibian camper, and cannot spring a leak.

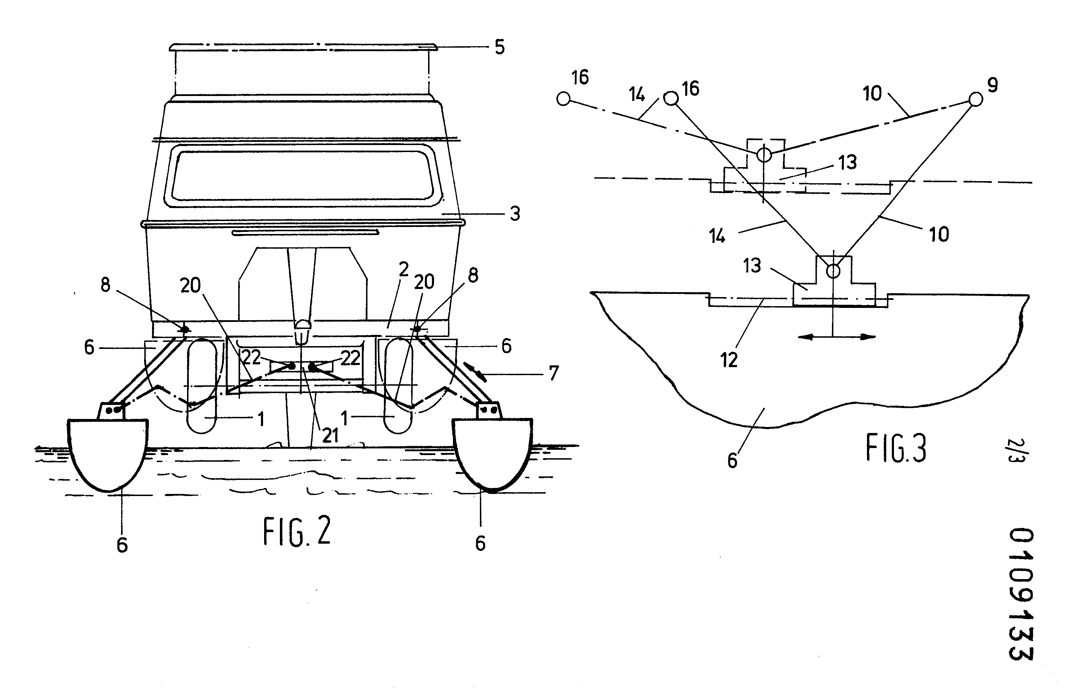

The pontoons are so secured to the under-carriage that the pontoons can be moved obliquely outwardly and downwardly as indicated by an arrow 7, in Fig. 2, in order for the amphibian camper to be brought into the aquatic mode. The amphibian camper then acquires a catamaran form, which has a high degree of stability in the water. As the pontoons have been moved downwardly, the wheels hardly come into contact with the water, and accordingly do not give any resistance during travel.

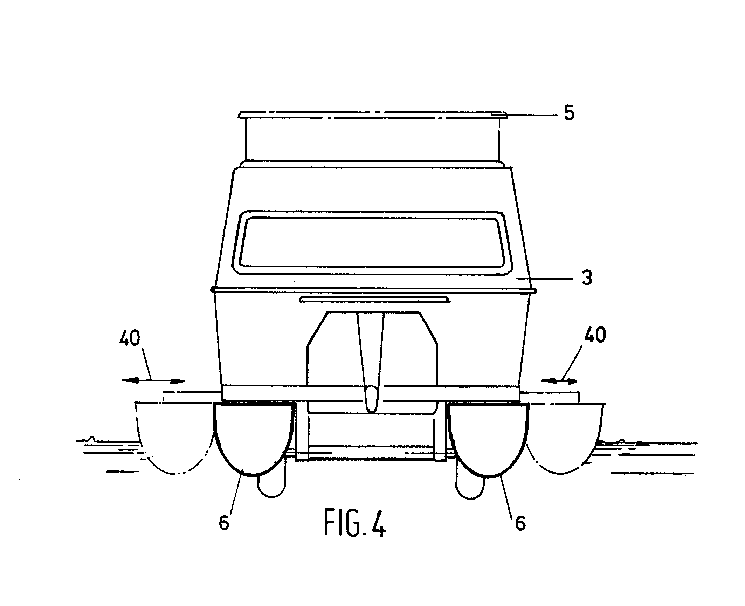

It is also possible for the pontoons, however, to be moved laterally outwardly only, as shown in Fig. 4. The catamaran form is then maintained.

The obliquely downward and outward movement can be made possible in various ways. In the embodiment shown in Figs. 1 and 2, a threaded rod 8 is secured on opposite sides of the under-carriage to extend in the longitudinal direction of the amphibian camper, which rod is mounted for rotation in a bearing block 9 at least at each end thereof.

In the operative condition of the pontoons, a bar 10, 11 extends from the forward and rearward bearing blocks, which bar is coupled to, or adjacent to, the bearing block so as to be pivotable but not displaceable, and extends obliquely downwardly and outwardly and rearwardly or forwardly, respectively. The other end of bar 10,11 is pivoted to a sliding block 13 provided in a recess 12 (Fig. 3) in the pontoons. Extending from each sliding block 13 is a second bar 14,15, also pivotally secured, to points, designated 16 and 17, respectively, located more towards the centre of the threaded rod relative to bars 10 and 11. At points 16 and 17, bars 14 and 15 are coupled to the threaded rod by means of a nut portion pivoted to the rods.

Connected further to the threaded rod is a crank 18 which, in the embodiment shown, is situated at the forward end and may be detachable.

Furthermore, in the embodiment shown, the threading on the forward part of the threaded rod should be opposite to the threading on the rearward part of the threaded rod. This is not necessary if, for example, point 17 were formed as a fixed, i.e. non-displaceable, point of attachment for bar 15, and bar 11 had a nut portion engaging around

0109133

the threaded rod.

By rotating the threaded rod by means of crank 18, points 16 and 17 are displaced relatively to the non-displaceable points of attachment of bars 14 and 15, so that the pontoons move towards, or away from, the under-carriage. All this is once again shown diagrammatically in Fig. 3, which shows a pontoon with the position of the associated linkage in two modes. For the most retracted mode of the pontoon, accented reference numerals have been used in Fig. 3.

In order to prevent the pontoons from being displaced longitudinally relatively to the under-carriage during the retraction or extension, sliding blocks 13 are provided, which can move over a suitable path in a groove 12 formed in the pontoons, which groove is, for example, dovetailed in cross-section.

In order that the position of the pontoons in the extended condition may be unambiguously defined, and in order for them to be supported, each pontoon is further secured to the under-carriage 2 by means of a telescoping or collapsing strut 20, as shown in Fig. 2. Furthermore, in the construction shown in Fig. 2, a substantially horizontal guide rail 21 is used, provided with end stops, and in which attachment members 22 for the collapsing bars or links 20 can slide. If desired, locking means may be provided for retaining the attachment members in a specific position.

Fig. 1 further shows the conventional trailer hitch, which if desired may be of collapsible or removable design, designated at 23.

There is also shown a rearwardly projecting extension piece 24 of the under-carriage, on which a motor 25 can be mounted. Alternatively the motor can be secured so that, during travel over land, it is housed within the superstructure, in an elevated position. When used on the water, the motor can be moved outwardly over guide 41, as shown in ghost outline. The motor may also be fixedly secured to the extension piece 24, which may then be designed so as to be retractable and extendable.

Fig. 4 shows a variant of the embodiment described in which the pontoons can be simply pulled outwardly in a horizontal direction, as indicated by an arrow 40. For this purpose the pontoons may each be secured to the ends of two or more horizontal bars or tubes, which can slide in or around associated guides extending transversely to the longitudinal direction of the amphibian camper, which guides are preferably provided with end stops and/or locking means.

It is noted that various modifications will readily occur to those skilled in the art. Thus, the possibility of extension of the pontoons shown in Fig. 4 could also be realized using a threaded system similar to that shown in Figs. 1 and 2.

These and other modifications obvious to those skilled in the art are deemed to fall within the scope of the present invention as defined in the accompanying claims.

*******

C L A I M S:

1. An amphibian camper comprising a wheeled under-carriage, a superstructure mounted on said under-carriage and serving as living quarters, and pontoons secured on opposite sides, characterized in that each pontoon is a dimensionally stable body which, in an inoperative position, is situated substantially underneath said superstructure, and that extension means are provided for moving the pontoons from the inoperative position into a catamaran position in which they are located more outwardly from said superstructure.

2. An amphibian camper according to claim 1, characterized in that said extension means are arranged to move the pontoons from their inoperative position simultaneously outwardly and downwardly.

3. An amphibian camper according to claim 1 or 12, characterized in that the pontoons are provided with recesses at their facing sides to accommodate the wheels in their inoperative position.

4. An amphibian camper according to claim 2 or 3, characterized in that the extension means for each pontoon comprises a threaded rod extending longitudinally along said under-carriage and rotatable by means of a crank, said rod being arranged to cooperate with a nut member at the end of a link of at least one V-shaped linkage, the other link of which is connected to said threaded rod so as to be pivotable without being displaceable, the ends of the links remote from said rod being pivoted to the pontoons.

5. An amphibian camper according to claim 4, characterized in that the links of each V-shaped linkage are coupled to the associated pontoon by means of a slide block capable of sliding relatively to the pontoon over a limited length, but being otherwise fixedly connected thereto.

6. An amphibian camper according to claim 5, characterized in that each slide block is confined in a dovetail groove.

7. An amphibian camper according to any one of the preceding claims, characterized in that each pontoon is connected to the under-carriage by means of at least one folding or telescoping strut.

8. An amphibian camper according to claim 7, characterized in that each strut has a point of connection to the under-carriage, which is slidable over a certain length.

9. An amphibian camper according to claim 1, characterized in that the extension means for each pontoon comprise at least two bars or tubes extending substantially horizontally and transversely to the longitudinal direction of the pontoons and arranged for sliding cooperation with corresponding guide means secured to the under-carriage, there being provided locking means for arresting the pontoons in the retracted or extended position.

10. An amphibian camper according to any one of the preceding claims, characterized in that the under-carriage is provided at its rear end with an extension piece on which a motor can be mounted.

11. An amphibian camper according to claim 10, characterized in that the rear end extension piece is arranged to be retractable and extensible.

12. An amphibian camper according to claim 10, characterized in that the motor is movable over rail members from an inoperative position within the superstructure to an operative position behind the superstructure.

13. An amphibian camper according to any one of the preceding claims 1-12, characterized in that, within the rear part of the superstructure, the motor is placed in a guide in which the motor can be moved into an upper position or a lower position, and locked in these positions, according as the camper is used on land or on the water, respectively.

&&&&&&

FIG.1

0109133

FIG.3

FIG.2

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 673 622  (ALLEN) <br> * Columns 1-6; figure 4 * | 1,2,9 | B 60 F    3/00 |
| X | FR-A-2 424 140  (CARUDEL) <br><br> * Columns 1,3,5 * | 1,3,9, 10 | |
| X | US-A-3 860 982  (RUMSEY) <br> * Figure 5 * | 1 | |
| X | DE-A-2 238 786  (BORZIK) <br> * Column 3 * | 1 | |
| X | FR-A-2 105 132  (VUARNESSON) <br> * Column 1 * | 1 | |
| X | US-A-3 877 094  (KELLEY) <br> * Column 1 * | 1 | TECHNICAL FIELDS SEARCHED (Int. Cl. ³) <br><br> B 60 F    3/00 |

The present search report has been drawn up for all claims

| Place of search | Date of completion of the search | Examiner |
|---|---|---|
| THE HAGUE | 25-01-1984 | SCHMITTER J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82